# EUROPEAN PATENT APPLICATION

(11) **EP 4 832 642 A1**
(43) Date of publication of application: **28.10.2026**
(21) Application number: 23962254.1
(22) Date of filing: 21.12.2023
(51) Int. Cl.: H04W 74/02, H04W 72/40, H04W 72/0446

(54) **ACCESS POINT AND TERMINAL DEVICE**

(71) Applicant: NTT, Inc., Tokyo 100-8116 (JP)
(72) Inventor: KISHIDA, Akira, Musashino-shi, Tokyo 180-8585 (JP); ASAI, Yusuke, Musashino-shi, Tokyo 180-8585 (JP); NAGANO, Kotaro, Musashino-shi, Tokyo 180-8585 (JP); ABEYSEKERA, Hirantha, Musashino-shi, Tokyo 180-8585 (JP); OTANI, Hanae, Musashino-shi, Tokyo 180-8585 (JP); IWATANI, Junichi, Musashino-shi, Tokyo 180-8585 (JP); YAMADA, Tomoyuki, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/046026
(87) International publication number: WO 2025/134334

(57) **Abstract**

A terminal apparatus in an embodiment includes a communication circuit and a processor. The communication circuit is configured to transmit and receive a wireless signal. The processor is configured to establish a wireless link with an access point by using the communication circuit. In a period allocated to peer-to-peer (P2P) communication by a pair of terminal apparatuses that have established a wireless link with the access point, the processor is further configured to prohibit transmission of a wireless signal for a first time period in a case where the terminal apparatus is in a coverage area of one terminal apparatus of the pair of terminal apparatuses and not to prohibit the transmission in a case where the terminal apparatus is outside the coverage area of the one terminal apparatus.

## Description

### Technical Field

An embodiment relates to an access point and a terminal apparatus.

### Background Art

A wireless local area network (LAN) is known as a communication system that wirelessly connects an access point and a terminal apparatus. The terminal apparatus can access a network via the access point by using the wireless LAN.

In the wireless LAN, the access point can support a peer-to-peer (P2P) communication method. In P2P communication, the terminal apparatus can directly communicate with another terminal apparatus bypassing the access point. In order to improve the communication stability of a pair of terminal apparatuses involved in P2P communication, transmission and reception of a data frame and the like by another terminal apparatus not involved in P2P communication are preferably prohibited in a period in which P2P communication is executed.

### Citation List

### Non Patent Literature

Non Patent Literature 1: IEEE P802.11beTM Draft4.1, "35.2.1 TXOP, 35.2.1.2 Triggered TXOP sharing procedure", p491-p495, September 2023

### Summary of Invention

### Technical Problem

However, in a period in which P2P communication is executed, a terminal apparatus not involved in P2P communication is not affected by P2P communication in some cases. Such a terminal apparatus entering a standby state in the period in which P2P communication is executed may be a factor of a decrease in communication efficiency.

The present invention has been made in view of the above circumstances, and an object thereof is to provide an access point and a terminal apparatus capable of improving the communication efficiency of a terminal apparatus that is not affected by a pair of terminal apparatuses involved in P2P communication in P2P communication.

### Solution to Problem

A terminal apparatus in an embodiment includes a communication circuit and a processor. The communication circuit is configured to transmit and receive a wireless signal. The processor is configured to establish a wireless link with an access point by using the communication circuit. In a period allocated to peer-to-peer (P2P) communication by a pair of terminal apparatuses that have established a wireless link with the access point, the processor is further configured to prohibit transmission of a wireless signal for a first time period in a case where the terminal apparatus is in a coverage area of one terminal apparatus of the pair of terminal apparatuses and not to prohibit the transmission in a case where the terminal apparatus is outside the coverage area of the one terminal apparatus.

### Advantageous Effects of Invention

According to an embodiment, it is possible to provide an access point and a terminal apparatus capable of improving the communication efficiency of a terminal apparatus that is not affected by a pair of terminal apparatuses involved in P2P communication in P2P communication.

### Brief Description of Drawings

Fig. 1 is a block diagram showing an example of an overall configuration of a communication system according to an embodiment.
Fig. 2 is a block diagram showing an example of a hardware configuration of an access point included in the communication system according to the embodiment.
Fig. 3 is a block diagram showing an example of a functional configuration of the access point included in the communication system according to the embodiment.
Fig. 4 is a block diagram showing an example of a hardware configuration of a terminal apparatus included in the communication system according to the embodiment.
Fig. 5 is a block diagram showing an example of a functional configuration of the terminal apparatus included in the communication system according to the embodiment.
Fig. 6 is a flowchart showing an example of an operation of the access point included in the communication system according to the embodiment.
Fig. 7 is a block diagram showing an example of a format of a P2P communication start frame used in the communication system according to the embodiment.
Fig. 8 is a flowchart showing an example of an operation of the terminal apparatus included in the communication system according to the embodiment.
Fig. 9 is a schematic diagram showing a specific example of P2P communication of the communication system according to the embodiment.
Fig. 10 is a timing chart showing an example of a sequence of P2P communication in the communication system according to the embodiment.

### Description of Embodiments

Hereinafter, a communication system according to an embodiment will be described with reference to the drawings. The embodiment shows a device and a method for embodying the technical idea of the invention. The drawings are schematic or conceptual. In the present specification, the same reference signs are added to components having substantially the same functions and configurations. Numbers after the characters constituting the reference signs are referred to by reference signs including the same characters and are used to distinguish between elements having similar configurations. Where elements denoted by reference signs including the same characters do not need to be distinguished from one another, these elements are referred to by reference signs including only characters.

### <1> Configuration

First, a configuration of a communication system 1 according to an embodiment will be described.

### <1-1> Overall Configuration of Communication System 1

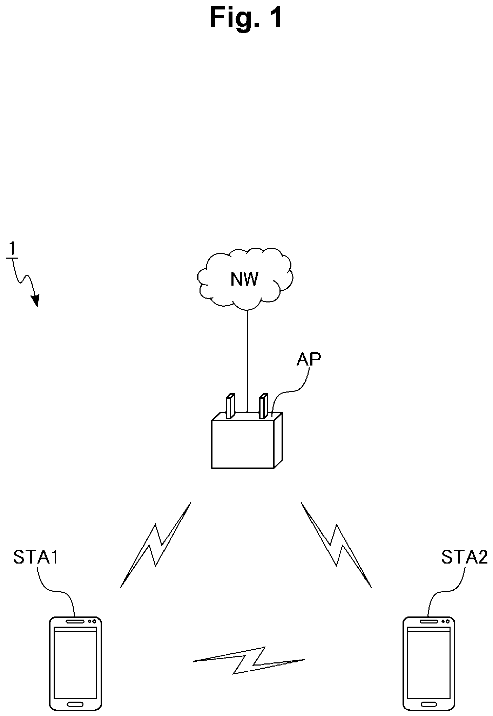

Fig. 1 is a block diagram showing an example of an overall configuration of the communication system 1 according to the embodiment. As shown in Fig. 1, the communication system 1 includes, for example, an access point AP and a plurality of terminal apparatuses STA. In this example, two terminal apparatuses STA1 and STA2 are wirelessly connected to the access point AP.

The access point AP is a base station of a wireless LAN. The access point AP is configured to establish links with the plurality of terminal apparatuses STA and to be able to wirelessly communicate with each terminal apparatus STA that has established the link. The access point AP is connected to a network NW and is configured to be able to communicate with a server (not shown) on the network NW. The access point AP and the network NW may be wirelessly connected or connected via wire. Further, the access point AP supports peer-to-peer (P2P) communication by a pair of terminal apparatuses STA included in the plurality of terminal apparatuses STA belonging to the access point itself.

The terminal apparatus STA is a wireless terminal such as a smartphone or a personal computer (PC). The terminal apparatus STA is configured to be able to communicate with a server (not shown) on the network NW via the wirelessly connected access point AP. In a case where P2P communication is executed, the pair of terminal apparatuses STA is set by the access point AP. In P2P communication, one terminal apparatus STA of the pair of terminal apparatuses STA can directly communicate with the other terminal apparatus STA. For example, the terminal apparatus STA1 can communicate with the terminal apparatus STA2 bypassing the access point AP based on an instruction from the access point AP.

In the embodiment, the access point AP secures a communication period for P2P communication (hereinafter, referred to as a "P2P communication period") in a case where the access point causes the pair of terminal apparatuses STA to execute P2P communication. As described above, a P2P communication method for securing the P2P communication period will be referred to as triggered TXOP sharing, for example. A frame for starting the triggered TXOP sharing is, for example, a trigger frame such as MU-RTS_TXS_TF. In the P2P communication period, the pair of terminal apparatuses STA can directly transmit and receive a data frame and the like bypassing the access point AP while an influence from another terminal apparatus STA is suppressed.

Wireless communication between the access point AP and the terminal apparatus STA conforms to, for example, the IEEE 802.11 standard. The IEEE 802.11 standard has a wireless communication function based on an open systems interconnection (OSI) reference model. In the OSI reference model, the wireless communication function is divided into seven layers (first layer: physical layer, second layer: data link layer, third layer: network layer, fourth layer: transport layer, fifth layer: session layer, sixth layer: presentation layer, and seventh layer: application layer). The data link layer includes a logical link control (LLC) sublayer and a media access control (MAC) sublayer. The LLC sublayer forms an LLC packet by adding a destination service access point (DSAP) header, a source service access point (SSAP) header, and the like to data input from a higher-level application. The MAC layer forms a MAC frame by adding a MAC header to the LLC packet. In the present specification, processing for the first layer and the MAC sublayer of the second layer will be mainly described, and description of processing for the other layers will be omitted.

### <1-2> Configuration of Access Point AP

A configuration of the access point AP will be described below.

### <1-2-1> Hardware Configuration of Access Point AP

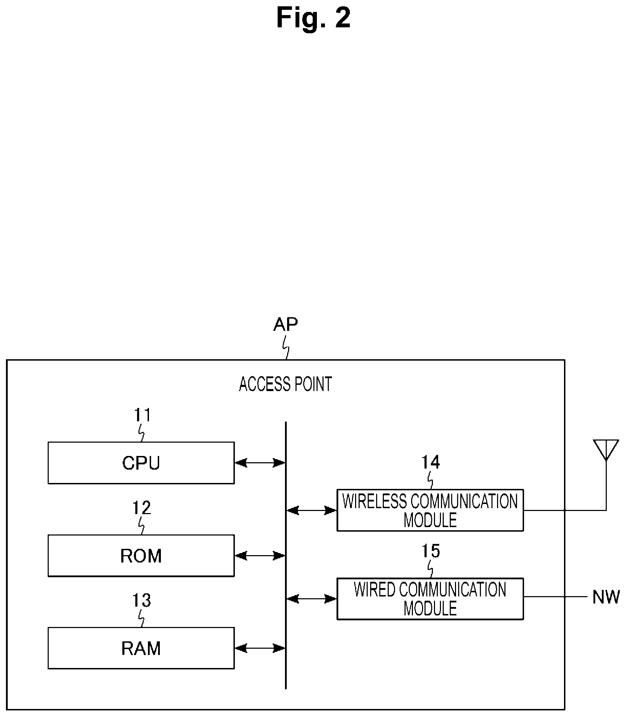

Fig. 2 is a block diagram showing an example of a hardware configuration of the access point AP included in the communication system 1 according to the embodiment. As shown in Fig. 2, the access point AP includes, for example, a central processing unit (CPU) 11, a read only memory (ROM) 12, a random access memory (RAM) 13, a wireless communication module 14, and a wired communication module 15.

The CPU 11 is an integrated circuit capable of executing various programs and controls the entire operation of the access point AP. The ROM 12 is, for example, a nonvolatile semiconductor memory and stores a program for controlling the access point AP, control data, and the like. The RAM 13 is, for example, a volatile semiconductor memory and is used as a working area for the CPU 11. The wireless communication module 14 is a communication circuit configured to be able to transmit and receive a wireless signal via an antenna and used to transmit and receive data and the like to and from the terminal apparatus STA. The wired communication module 15 is a communication circuit used to transmit and receive data and the like with a wired signal and is configured to be connectable to the network NW.

Note that the access point AP may have another hardware configuration. For example, the access point AP may be wirelessly connected to the network NW. In this case, the wired communication module 15 can be omitted from the access point AP. The antenna may be built in the access point AP or may be externally connected.

### <1-2-2> Functional Configuration of Access Point AP

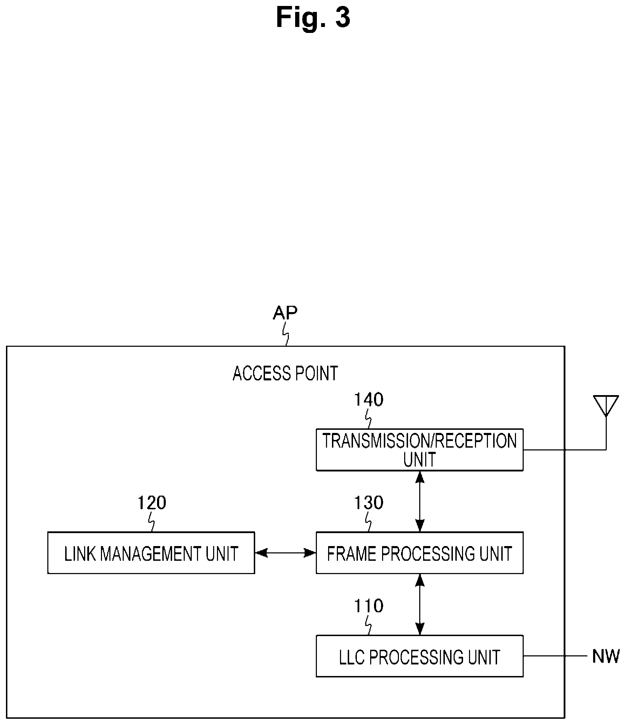

Fig. 3 is a block diagram showing an example of a functional configuration of the access point AP included in the communication system 1 according to the embodiment. As shown in Fig. 3, the access point AP includes, for example, an LLC processing unit 110, a link management unit 120, a frame processing unit 130, and a transmission/reception unit 140. The LLC processing unit 110 executes processing of the LLC sublayer of the second layer and the third layer to the seventh layer. The link management unit 120, the frame processing unit 130, and the transmission/reception unit 140 execute processing of the MAC sublayer of the second layer. The transmission/reception unit 140 further executes processing of the first layer.

The LLC processing unit 110 generates an LLC packet by adding a DSAP header, an SSAP header, and the like to data received from the network NW. Then, the LLC processing unit 110 inputs the generated LLC packet to the frame processing unit 130. Further, the LLC processing unit 110 extracts data from an LLC packet input from the frame processing unit 130. Then, the LLC processing unit 110 transmits the extracted data to the network NW.

The link management unit 120 manages a state of the links between the access point AP and the plurality of terminal apparatuses STA. The link management unit 120 can perform association processing and authentication processing in response to a connection request from the terminal apparatus STA. Further, the link management unit 120 manages information regarding P2P communication. A MAC frame including information regarding the link or the like and information regarding P2P communication can be input and output between the link management unit 120 and the frame processing unit 130.

The frame processing unit 130 generates a MAC frame by adding a MAC header to the LLC packet input from the LLC processing unit 110. Then, the frame processing unit 130 outputs the generated MAC frame to the transmission/reception unit 140. Further, the frame processing unit 130 outputs a MAC frame input from the transmission/reception unit 140 to any one of the LLC processing unit 110 and the link management unit 120 in accordance with the type of the MAC frame. The frame processing unit 130 may output the LLC packet extracted from the MAC frame to the LLC processing unit 110 or the like.

The transmission/reception unit 140 is configured to be able to transmit and receive a wireless signal by using an enhanced distributed channel access (EDCA) mechanism. Specifically, the transmission/reception unit 140 executes carrier sensing based on carrier sense multiple access with collision avoidance (CSMA/CA) in accordance with a preset access parameter. In carrier sensing, acquisition of a transmission right is stopped in a case where a state of a channel is a busy state, and a transmission right of a MAC frame is acquired in a case where the state of the channel is an idle state for a predetermined time. When transmitting the MAC frame, the transmission/reception unit 140 generates a wireless frame by adding a preamble or the like to the MAC frame input from the frame processing unit 130. Then, the transmission/reception unit 140 converts the generated wireless frame into a wireless signal (wireless medium) and emits (transmits) the wireless signal via an antenna. The transmission/reception unit 140 may transmit a trigger frame for communication of uplink traffic. Further, the transmission/reception unit 140 converts a wireless signal received via the antenna into a wireless frame. The transmission/reception unit 140 extracts a MAC frame from the converted wireless frame and outputs the MAC frame to the frame processing unit 130.

In the communication system 1, the access parameter is set for each access category. The access category is, for example, "voice (VO)", "video (VI)", "best effort (BE)", or "background (BK)". The access parameter used for carrier sensing is, for example, contention window (CW) min, CWmax, arbitration interframe space (AIFS), or transmission opportunity (TXOP) limit. The contention window is a parameter used to determine a transmission wait time for collision avoidance. The CWmin and the CWmax correspond to a minimum value and a maximum value of the contention window, respectively. The arbitration interframe space (AIFS) corresponds to a fixed transmission wait time set for each access category for collision avoidance control having a priority control function. The TXOP corresponds to a channel occupancy time. The TXOP Limit corresponds to an upper limit value of the TXOP. Each link can obtain the transmission right more easily as the CWmin and the CWmax are shorter. The priority of each link is higher as the AIFS is smaller. An amount of data transmitted with one transmission right increases as the value of the TXOP Limit increases. The access parameter is set such that, for example, transmission of a wireless signal is prioritized in the following order: "VO", "VI", "BE", and "BK". The access parameter may also be referred to as an EDCA parameter.

### <1-3> Configuration of Terminal Apparatus STA

Hereinafter, a configuration of the terminal apparatus STA will be described.

### <1-3-1> Hardware Configuration of Terminal Apparatus STA

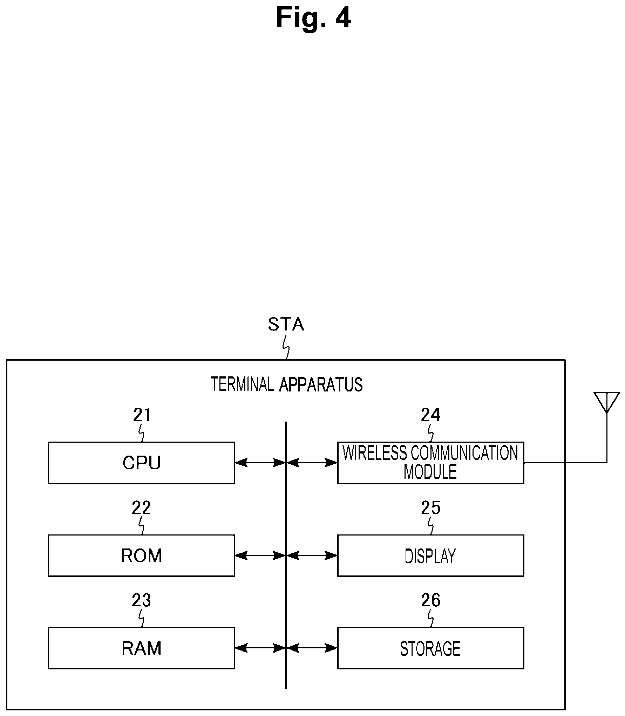

Fig. 4 is a block diagram showing an example of a hardware configuration of the terminal apparatus STA included in the communication system 1 according to the embodiment. As shown in Fig. 4, the terminal apparatus STA includes, for example, a CPU 21, a ROM 22, a RAM 23, a wireless communication module 24, a display 25, and a storage 26.

The CPU 21 is an integrated circuit capable of executing various programs and controls the entire operation of the terminal apparatus STA. The ROM 22 is, for example, a nonvolatile semiconductor memory and stores a program for controlling the terminal apparatus STA, control data, and the like. The RAM 23 is, for example, a volatile semiconductor memory and is used as a working area for the CPU 21. The wireless communication module 24 is a communication circuit configured to be able to transmit and receive a wireless signal via an antenna and used to transmit and receive data and the like to and from the access point AP. The display 25 displays, for example, a graphical user interface (GUI) and the like corresponding to application software. The storage 26 is a nonvolatile storage device and stores, for example, system software and the like of the terminal apparatus STA.

Note that the terminal apparatus STA may have another hardware configuration. For example, in a case where the terminal apparatus STA is an Internet of Things (IoT) terminal or the like, the display 25 may be omitted from the terminal apparatus STA. The display 25 may have a function as an input interface of the terminal apparatus STA. The antenna may be built in the terminal apparatus STA or may be externally connected.

### <1-3-2> Functional Configuration of Terminal Apparatus STA

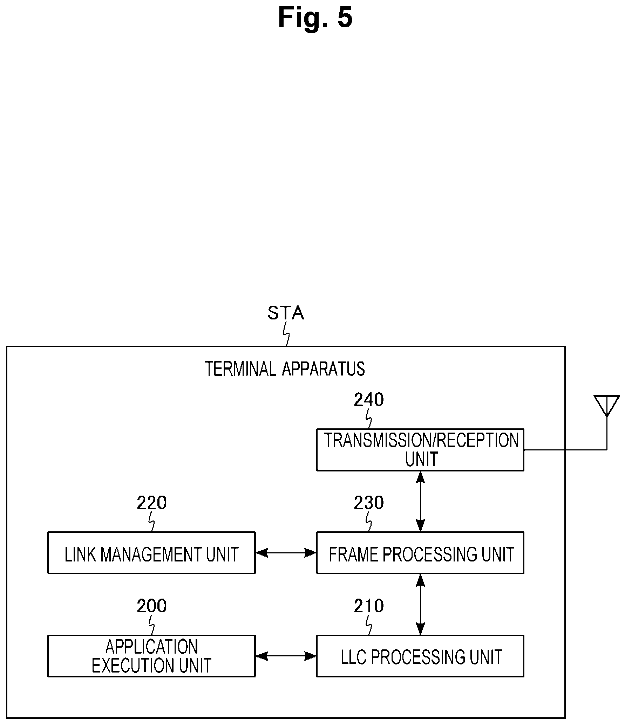

Fig. 5 is a block diagram showing an example of a functional configuration of the terminal apparatus STA included in the communication system 1 according to the embodiment. As shown in Fig. 5, the terminal apparatus STA includes, for example, an application execution unit 200, an LLC processing unit 210, a link management unit 220, a frame processing unit 230, and a transmission/reception unit 240. The application execution unit 200 executes processing corresponding to the seventh layer. The LLC processing unit 210 executes processing of the LLC sublayer of the second layer and the third layer to the seventh layer. The link management unit 220, the frame processing unit 230, and the transmission/reception unit 240 execute processing of the MAC sublayer of the second layer. The transmission/reception unit 240 further executes processing of the first layer.

The application execution unit 200 executes an application based on data input from the LLC processing unit 210. Further, the application execution unit 200 inputs data to the LLC processing unit 210. For example, the application execution unit 200 can display information of the application on the display 25. Further, the application execution unit 200 can operate based on operation of the input interface.

The LLC processing unit 210 generates an LLC packet by adding a DSAP header, an SSAP header, and the like to data received from the network NW. Then, the LLC processing unit 210 inputs the generated LLC packet to the frame processing unit 230. Further, the LLC processing unit 210 extracts data from an LLC packet input from the frame processing unit 230. Then, the LLC processing unit 210 transmits the extracted data to the application execution unit 200.

The link management unit 220 manages a state and the like of the link with the access point AP. The link management unit 220 can transmit a connection request to the access point AP and execute association processing and authentication processing. Further, the link management unit 220 manages information regarding P2P communication. The information regarding P2P communication includes, for example, information regarding a pair of terminal apparatuses STA involved in P2P communication and information regarding a start time and duration of a period allocated to P2P communication. A MAC frame including information regarding the link or the like and information regarding P2P communication can be input and output between the link management unit 220 and the frame processing unit 230.

The frame processing unit 230 generates a MAC frame by adding a MAC header to the LLC packet input from the LLC processing unit 210. Then, the frame processing unit 230 outputs the generated MAC frame to the transmission/reception unit 240. Further, the frame processing unit 230 outputs the MAC frame input from the transmission/reception unit 240 to any one of the LLC processing unit 210 and the link management unit 220 in accordance with the type of the MAC frame. The frame processing unit 230 may output the LLC packet extracted from the MAC frame to the LLC processing unit 210 or the like.

The transmission/reception unit 240 is configured to be able to transmit and receive a wireless signal by using the EDCA mechanism. Specifically, the transmission/reception unit 240 executes carrier sensing based on CSMA/CA in accordance with a preset access parameter. When transmitting the MAC frame, the transmission/reception unit 240 generates a wireless frame by adding a preamble or the like to the MAC frame input from the frame processing unit 230. Then, the transmission/reception unit 240 converts the generated wireless frame into a wireless signal (wireless medium) and emits (transmits) the wireless signal via an antenna. Further, the transmission/reception unit 240 converts a wireless signal received via the antenna into a wireless frame. The transmission/reception unit 240 extracts a MAC frame from the converted wireless frame and outputs the MAC frame to the frame processing unit 230.

### <2> Operation

Next, an operation of the communication system 1 according to the embodiment will be described.

### <2-1> Operation of Access Point AP

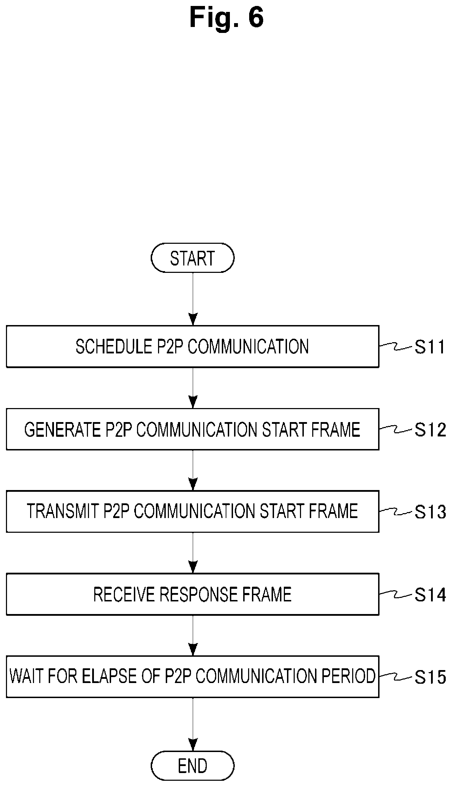

Fig. 6 is a flowchart showing an example of the operation of the access point AP included in the communication system 1 according to the embodiment. For example, when receiving a P2P communication request from the terminal apparatus STA, the access point AP starts a series of operations in Fig. 6 (start).

First, the access point AP schedules P2P communication based on the P2P communication request (step S11). At this time, the access point AP sets a pair of terminal apparatuses STA that executes P2P communication and a start time and duration of a period allocated to P2P communication (P2P communication period).

Next, the access point AP generates a P2P communication start frame based on the schedule of P2P communication (step S12). The P2P communication start frame includes information regarding the pair of terminal apparatuses STAs involved in P2P communication and information regarding the start time and duration of the P2P communication period. The P2P communication start frame is, for example, a trigger frame such as MU-RTS_TXS_TF. The P2P communication start frame may include information regarding the terminal apparatus STA that is prohibited from performing transmission in the P2P communication period and information regarding the start time and duration in which the terminal apparatus STA is prohibited from performing transmission.

Next, the access point AP transmits a P2P communication start frame (step S13). The transmitted P2P communication start frame can be received by each terminal apparatus STA in a coverage area of the access point AP. That is, the P2P communication start frame is also transmitted to the terminal apparatus STA not involved in P2P communication. For example, the terminal apparatus STA not involved in P2P communication sets a transmission prohibition period to the terminal apparatus itself based on the information regarding the P2P communication period acquired from the P2P communication start frame.

Next, the access point AP receives a response frame from the terminal apparatus STA on the data transmission side of the pair of terminal apparatuses STA involved in P2P communication, for example (step S14). The response frame indicates that the pair of terminal apparatuses STA involved in P2P communication can execute P2P communication.

Next, the access point AP waits for elapse of the P2P communication period (step S15). Note that, in the P2P communication period, the access point AP may communicate data and the like with the terminal apparatus STA that is not involved in P2P communication and has voluntarily removed the transmission prohibition. Such a terminal apparatus STA is located in the coverage area of the access point AP and outside a coverage area of the terminal apparatus STA involved in P2P communication. A sequence in which the terminal apparatus STA voluntarily removes the transmission prohibition will be described later. Thereafter, when the P2P communication period ends, the access point AP ends the series of processing in Fig. 6 (end) .

### (Specific Example of P2P Communication Start Frame)

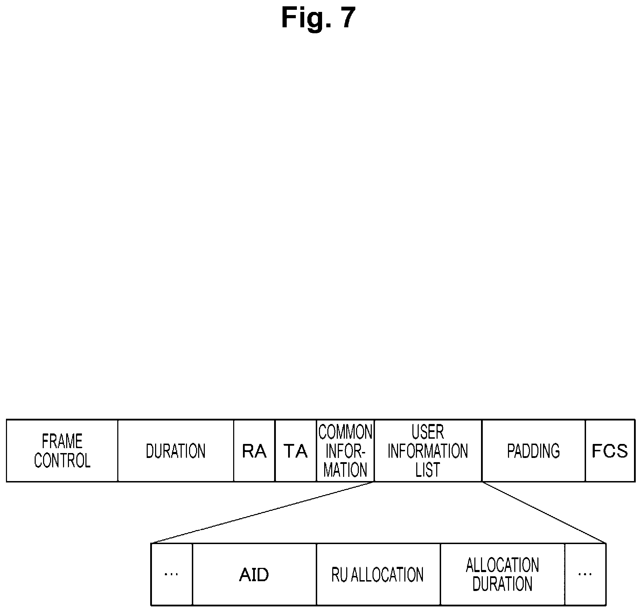

Fig. 7 is a block diagram showing an example of a format of the P2P communication start frame used in the communication system 1 according to the embodiment. As shown in Fig. 7, the P2P communication start frame includes, for example, a frame control field, a duration field, address fields (RA and TA), a common information field, a user information list field, a padding field, and a frame check sequence (FCS) field.

The frame control field stores various types of control information. The frame control field includes, for example, information indicating a frame type of the wireless frame. The duration field includes information indicating a scheduled period in which a wireless line is used. The address field includes information indicating a basic service set identifier (BSSID), a source address, a destination address, an address of a transmitter terminal, an address of a receiver terminal, and the like. The common information field includes information indicating a type of the trigger frame and the like. The user information list field includes information related to P2P communication. The padding is a region for adjusting the data length of the wireless frame. The FCS field stores an error detection code of a set of a MAC header and a frame body field and is used to determine whether or not there is an error in the data frame.

The user information list field includes, for example, an association identifier (AID), a resource unit allocation (RU), and an allocation duration. The AID includes information indicating an identifier of the terminal apparatus STA related to P2P communication. The RU allocation includes information regarding resources allocated to the associated AID. The allocation duration includes information related to the P2P communication period. Based on the content of the user information list field, for example, the terminal apparatus STA can confirm whether the terminal apparatus is a device on the transmission side of the data frame in P2P communication, a device on the reception side of the data frame, or a device not involved in P2P communication. Further, the terminal apparatus STA can set the P2P communication period based on the content of the user information list field.

Further, in a case where the terminal apparatus STA is not involved in P2P communication, the terminal apparatus STA may set the terminal apparatus itself to be prohibited from performing transmission in the P2P communication period based on the content of the user information list field, for example. The transmission prohibition may be set by setting allocation of communication resources (e.g. frequency, transmission timing, and period) to the terminal apparatus STA to zero. Further, the transmission prohibition may be set by the access point AP transmitting a transmission prohibition frame to the terminal apparatus STA to be prohibited from performing transmission. The period in which the terminal apparatus STA is prohibited from performing transmission will also be referred to as a network allocation vector (NAV).

In the communication system 1 according to the embodiment, the NAV is set to overlap the entire P2P communication period, for example. The present invention is not limited thereto, and the NAV, which is set to the terminal apparatus STA not involved in P2P communication in the P2P communication period, may be set to be shorter than the entire P2P communication period. Further, the NAV, which is set to the terminal apparatus STA not involved in P2P communication in the P2P communication period, may be set to be longer than the entire P2P communication period such that, for example, in a case where P2P communication fails for some reason, a time required for retransmission processing is estimated and the time required for the retransmission processing is covered. That is, the time in which the NAV is set may be equal to or longer than the length of the P2P communication period. In a case where the NAV is set to the same length as the P2P communication period when P2P communication is executed, information indicating a start time and duration of the NAV may be omitted from the P2P communication start frame. The NAV may also be set based on information regarding a channel occupancy time stored in an RTS/CTS packet.

### <2-2> Operation of Terminal Apparatus STA

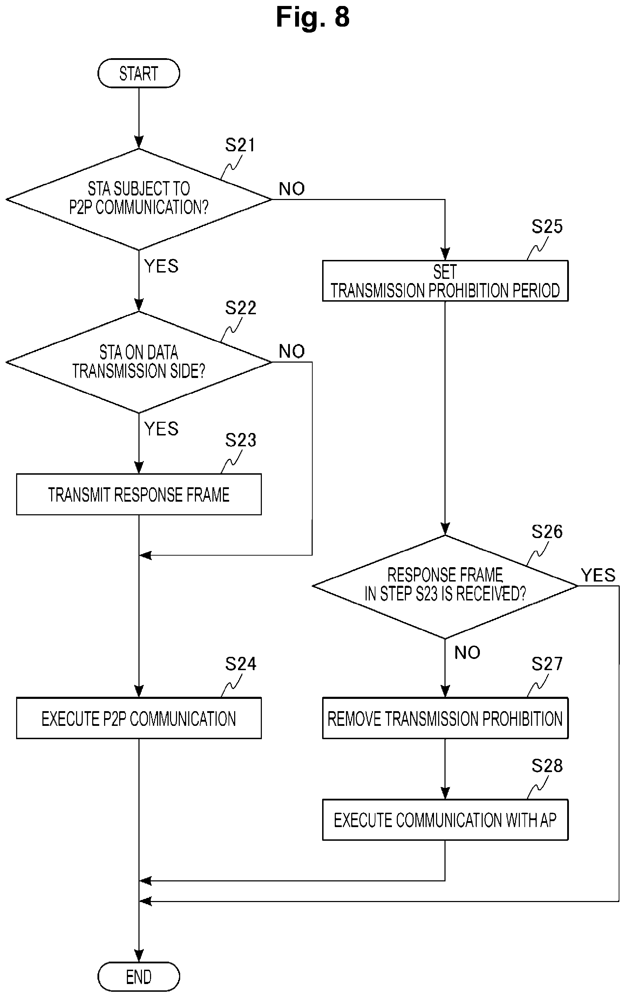

Fig. 8 is a flowchart showing an example of an operation of the terminal apparatus STA included in the communication system 1 according to the embodiment. For example, when receiving a P2P communication start frame, the terminal apparatus STA starts a series of operations in Fig. 8 (start).

First, the terminal apparatus STA confirms whether or not the terminal apparatus itself is a terminal apparatus STA involved in P2P communication (step S21). For example, the terminal apparatus STA can confirm whether or not the terminal apparatus itself is involved in P2P communication by referring to the user information list of the P2P communication start frame.

When confirming that the terminal apparatus itself is a terminal apparatus STA involved in P2P communication in the processing of step S21 (step S21: YES), the terminal apparatus STA proceeds to processing of step S22. In this case, the terminal apparatus STA is located in the coverage area of the access point AP and in a coverage area of the other terminal apparatus STA involved in P2P communication.

When confirming that the terminal apparatus itself is not a terminal apparatus STA involved in P2P communication in the processing of step S21 (step S21: NO), the terminal apparatus STA proceeds to processing of step S25. In this case, the terminal apparatus STA is located in the coverage area of the access point AP and in the coverage area of the terminal apparatus STA involved in P2P communication or in the coverage area of the access point AP and outside the coverage area of the terminal apparatus STA involved in P2P communication.

### (Operation of Terminal Apparatus STA Involved in P2P Communication)

In the processing of step S22, the terminal apparatus STA confirms whether or not the terminal apparatus itself is a terminal apparatus STA on the data transmission side. For example, the terminal apparatus STA can confirm whether or not the terminal apparatus itself is a terminal apparatus STA on the transmission side involved in P2P communication by referring to the user information list of the P2P communication start frame.

When confirming that the terminal apparatus itself is a terminal apparatus STA on the data transmission side in the processing of step S22 (step S22: YES), the terminal apparatus STA proceeds to processing of step S23. When confirming that the terminal apparatus itself is not a terminal apparatus STA on the data transmission side in the processing of step S22 (step S22: NO), the terminal apparatus STA proceeds to processing of step S24.

In the processing of step S23, the terminal apparatus STA transmits a response frame to the P2P communication start frame to the access point AP. The response frame is, for example, clear to send (CTS). When the processing of step S23 ends, the terminal apparatus STA proceeds to processing of step S24.

In the processing of step S24, the terminal apparatus STA executes P2P communication. Specifically, the terminal apparatus STA on the data transmission side and the terminal apparatus STA on the reception side designated by the P2P communication start frame directly transmit and receive data and the like bypassing the access point AP. When the P2P communication period ends, the terminal apparatus STA ends the series of processing in Fig. 8 (end) .

### (Operation of Terminal Apparatus STA not Involved in P2P Communication)

In the processing of step S25, the terminal apparatus STA sets a transmission prohibition period based on the P2P communication period designated by the P2P communication start frame. The transmission prohibition period may be directly designated by the P2P communication start frame or may be set based on the information regarding the P2P communication period. When the processing of step S25 ends, the terminal apparatus STA proceeds to processing of step S26.

In the processing of step S26, the terminal apparatus STA confirms whether or not the response frame in step S23 (e.g. CTS to MU-RTS_TXS_TF) has been received. That is, in the processing of step S26, the terminal apparatus STA confirms whether or not the terminal apparatus is located in the coverage area of the terminal apparatus STA involved in P2P communication or outside the coverage area of the terminal apparatus STA involved in P2P communication. In the processing of step S26, the terminal apparatus STA may determine that the response frame in step S23 has not been received on the basis that a predetermined time has elapsed from the reception of the P2P communication start frame. Specifically, for example, in a case where channel busy is not detected after short inter frame space (SIFS) from the reception of MU-RTS_TXF_TF, the terminal apparatus STA determines that the response frame in step S23 has not been received. Further, in the processing of step S26, the terminal apparatus STA may determine that the response frame in step S23 has not been received on the basis that the response frame in step S23 has not been normally received. Specifically, for example, in a case where channel busy is detected after SIFS from the reception of MU-RTS_TXF_TF, but cannot be recognized as CTS, the terminal apparatus STA determines that the response frame in step S23 has not been received.

When confirming that the response frame in step S23 has been received in the processing of step S26 (step S26: YES), the terminal apparatus STA prohibits transmission in the transmission prohibition period designated by the P2P communication start frame. That is, the terminal apparatus STA prohibits transmission and reception of data with the access point AP in the transmission prohibition period. When the P2P communication period ends, the terminal apparatus STA ends the series of processing in Fig. 8 (end) .

When confirming that the response frame in step S23 has not been received in the processing of step S26 (step S26: NO), the terminal apparatus STA removes a setting of the transmission prohibition period, that is, removes the transmission prohibition (step S27). Therefore, the terminal apparatus STA can transmit and receive data to and from the access point AP in the transmission prohibition period designated by the P2P communication start frame. As a result, the terminal apparatus STA can execute communication with the access point AP in the P2P communication period in accordance with traffic (step S28). For example, the terminal apparatus STA that has voluntarily removed the transmission prohibition communicates with the access point AP by using the EDCA mechanism in the P2P communication period. When the P2P communication period ends, the terminal apparatus STA ends the series of processing in Fig. 8 (end).

Note that the terminal apparatus STA may transmit a communication request to the access point AP in the processing of step S28. The access point AP may recognize that the transmission prohibition of the terminal apparatus STA has been removed based on the communication request. A transmission timing of the communication request may be a point of time when it can be confirmed that the response frame in step S23 has not been received or may be a point of time when communication with the access point AP becomes necessary. A communication method between the access point AP and the terminal apparatus STA in a case where the access point AP recognizes that the transmission prohibition of the terminal apparatus STA has been removed is not particularly limited. For example, in a case where there is uplink traffic, the access point AP may transmit a trigger frame for requesting to transmit the uplink traffic to the terminal apparatus STA on the basis that the transmission prohibition of the terminal apparatus STA has been removed.

Further, the terminal apparatus STA not involved in P2P communication may set the NAV of the P2P communication period based on the reception of the response frame in step S23. In this case, the terminal apparatus STA not involved in P2P communication does not set the NAV based on the P2P communication start frame. That is, the terminal apparatus STA not involved in P2P communication sets transmission prohibition in a case where the response frame in step S23 has been received in the P2P communication period and maintains a state communicable with the access point AP in a case where the response frame in step S23 has not been received.

### <2-3> Specific Example of P2P Communication

Next, a specific example of P2P communication of the communication system 1 according to the embodiment will be described.

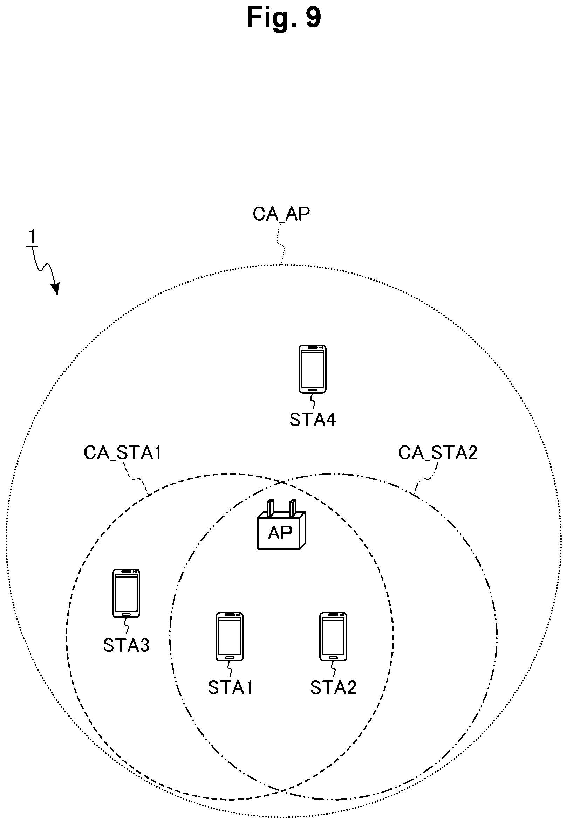

Fig. 9 is a schematic diagram showing the specific example of P2P communication of the communication system 1 according to the embodiment. As shown in Fig. 9, in the present example, four terminal apparatuses STA1, STA2, STA3, and STA4 are each wirelessly connected to the access point AP. Each of the four terminal apparatuses STA1 to STA4 is located in a coverage area CA_AP of the access point AP. The terminal apparatus STA1 is located in a coverage area CA_STA2 of the terminal apparatus STA2. The terminal apparatus STA2 is located in a coverage area CA_STA1 of the terminal apparatus STA1. The terminal apparatus STA3 is located in the coverage area CA_STA1 of the terminal apparatus STA1. The terminal apparatus STA4 is located outside the coverage area CA_STA1 of the terminal apparatus STA1 and outside the coverage area CA_STA2 of the terminal apparatus STA2.

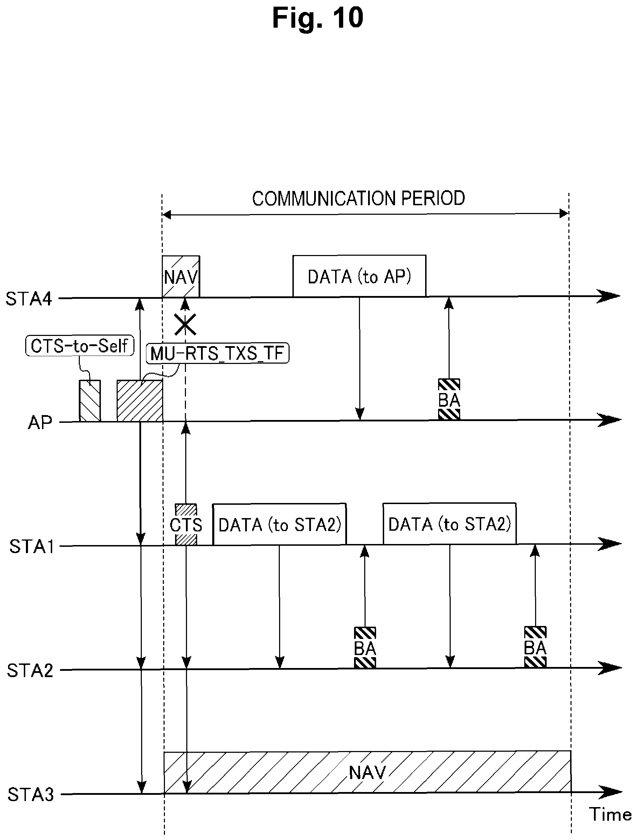

Fig. 10 is a timing chart showing an example of a sequence of P2P communication in the communication system according to the embodiment. Fig. 10 shows a case where a pair of the terminal apparatuses STA1 and STA2 execute P2P communication in arrangement of the access point AP and the four terminal apparatuses STA1 to STA4 in Fig. 9.

As shown in Fig. 10, when starting P2P communication, the access point AP may first transmit a CTS-to-Self frame. The CTS-to-Self frame is CTS transmitted to the access point itself as a destination and is used for access control. By transmitting the CTS-to-Self frame, the access point AP can prohibit transmission by all the terminal apparatuses STA in the coverage area CA_AP for a certain period.

Next, the access point AP transmits MU-RTS_TXS_TF. MU-RTS_TXS_TF is received by all the terminal apparatuses STA1 to STA4 in the coverage area CA_AP. In the present example, the terminal apparatuses STA involved in P2P communication are STA1 and STA2, and the terminal apparatuses STA not involved in P2P communication are STA3 and STA4. Therefore, each of the terminal apparatuses STA1 and STA2 sets the P2P communication period based on the reception of MU-RTS_TXS_TF. Meanwhile, each of the terminal apparatuses STA3 and STA4 sets the transmission prohibition period (NAV) in accordance with the P2P communication period based on the reception of MU-RTS_TXS)_TF.

Then, the terminal apparatus STA1 on the transmission side of the pair of terminal apparatuses STA involved in P2P communication transmits a response frame (CTS) to MU-RTS_TXS_TF. This prevents the terminal apparatus STA not involved in P2P communication from interrupting frame transmission in the allocated P2P communication period (TXOP period). In the present example, the CTS is received by the access point AP and the terminal apparatuses STA2 and STA3 in the coverage area CA_STA1 of the terminal apparatus STA1 and is not received by the terminal apparatus STA4 outside the coverage area CA_STA1. Therefore, the terminal apparatus STA3 sets the NAV in the P2P communication period in response to the reception of the CTS. Meanwhile, because the terminal apparatus STA4 cannot normally receive the CTS, the terminal apparatus STA4 removes (resets) a setting of the NAV in the P2P communication period. Note that, in a case where the NAV is set by the CTS-to-Self frame, the terminal apparatus STA4 removes the setting of the NAV.

Thereafter, the terminal apparatus STA1 transmits a data frame to the terminal apparatus STA2 bypassing the access point AP in the P2P communication period. In response to successful reception of a data frame from the terminal apparatus STA1 in the P2P communication period, the terminal apparatus STA2 transmits BlockAck (BA) to the terminal apparatus STA1 bypassing the access point AP. The NAV is set in the P2P communication period, and thus the terminal apparatus STA3 stands by. The terminal apparatus STA4 transmits, for example, a data frame to the access point AP in the P2P communication period because the NAV is removed. The access point AP transmits BlockAck to the terminal apparatus STA4 in response to reception of the data frame from the terminal apparatus STA4.

As described above, in the P2P communication period, the length of the NAV set to the terminal apparatus STA3 is longer than the length of the NAV set to the terminal apparatus STA4. The length of the NAV set to the terminal apparatus STA3 is equal to the length of the P2P communication period. In Fig. 10, the length of the NAV set to the terminal apparatus STA4 is determined on the basis that the CTS to MU-RTS_TXS_TF has not been received from the terminal apparatus STA1. When the P2P communication period ends, the access point AP and each terminal apparatus STA execute subsequent processing.

### <3> Effects of Embodiment

In the communication system 1 according to the embodiment, the access point AP is configured to allocate a period for P2P communication (P2P communication period) by a pair of terminal apparatuses STA, to prohibit transmission and reception of data in a case where another terminal apparatus STA is in a coverage area of one terminal apparatus STA of the pair of terminal apparatuses STA in the P2P communication period, and to accept transmission and reception of data in a case where another terminal apparatus STA is outside the coverage area of the one terminal apparatus STA. Further, in the P2P communication period, the terminal apparatus STA is configured to prohibit transmission of a wireless signal for a first time period in a case where the terminal apparatus is in the coverage area of the one terminal apparatus and not to prohibit the transmission in a case where the terminal apparatus is outside the coverage area of the one terminal apparatus.

As a result, the access point AP according to the embodiment secures the communication period for P2P communication by using the P2P communication start frame, thereby improving the communication stability in P2P communication. Further, the terminal apparatus STA according to the embodiment removes transmission prohibition on the basis that a confirmation frame to the P2P communication start frame has not been received and thus can transmit and receive a frame in the P2P communication period. Therefore, the communication system 1 according to the embodiment can improve the communication efficiency of the terminal apparatus STA that is not affected by the pair of terminal apparatuses involved in P2P communication in P2P communication.

### <4> Others

The conversion processing from the wireless frame into the wireless signal, which has been described in the embodiment, includes, for example, any of convolutional encoding processing, interleave processing, subcarrier modulation processing, inverse fast Fourier transform processing, orthogonal frequency division multiplexing (OFDM) modulation processing, and frequency conversion processing. The conversion processing from a wireless signal into a wireless frame described in the embodiment includes, for example, any one of frequency conversion processing, OFDM demodulation processing, fast Fourier transform processing, subcarrier demodulation processing, deinterleave processing, and Viterbi decoding processing.

In the embodiment, the CPU 11 of the access point AP and the CPU 21 of the terminal apparatus STA may be each another circuit. For example, the access point AP and the terminal apparatus STA may each include a micro processing unit (MPU) or the like instead of the CPU. Each piece of the processing described in the embodiment may be implemented by dedicated hardware. Each piece of processing of the access point AP and the terminal apparatus STA may include processing executed by software and processing executed by hardware in combination or may include only one of the pieces of processing.

The functional configurations of the access point AP and the terminal apparatus STA according to the embodiment may be another functional configuration if the above-described operation can be executed. For example, the channel access function of the access point AP may be implemented in the frame processing unit 130 instead of the transmission/reception unit 140. Similarly, the channel access function of the terminal apparatus STA may be implemented in the frame processing unit 230 instead of the transmission/reception unit 240.

The flowcharts used to describe the operation in the embodiment are merely examples. Other pieces of processing may be added to each operation described in the embodiment. In the present specification, a "data frame" corresponds to a wireless frame that includes data. As the wireless communication standard, a wireless communication standard different from the IEEE 802.11 standard may be used.

Note that the present invention is not limited to the embodiments described above, and various modifications can be made in the implementation stage without departing from the gist of the invention. In addition, the embodiments may be implemented in appropriate combination, and in that case, combined effects can be obtained. Further, the above embodiments include various inventions, and various inventions can be extracted by combinations selected from a plurality of disclosed components. For example, even if some components are deleted from all the components described in the embodiments, a configuration from which the components have been deleted can be extracted as an invention as long as the configuration can solve the problems and can achieve effects.

### Reference Signs List

- 1: Communication system
- AP: Access point
- STA: Terminal apparatus
- 11, 21: CPU
- 12, 22: ROM
- 13, 23: RAM
- 14, 24: Wireless communication module
- 15: Wired communication module
- 25: Display
- 26: Storage
- 110, 210: LLC processing unit
- 120, 220: Link management unit
- 130, 230: Frame processing unit
- 140, 240: Transmission/reception unit
- 200: Application execution unit

## Claims

1. A terminal apparatus comprising:
a communication circuit configured to transmit and receive a wireless signal; and
a processor configured to establish a wireless link with an access point by using the communication circuit and, in a period allocated to peer-to-peer (P2P) communication by a pair of terminal apparatuses that have established a wireless link with the access point, to prohibit transmission of a wireless signal for a first time period in a case where the terminal apparatus is in a coverage area of one terminal apparatus of the pair of terminal apparatuses and not to prohibit the transmission in a case where the terminal apparatus is outside the coverage area of the one terminal apparatus.

2. The terminal apparatus according to claim 1, wherein
the processor is further configured to start prohibiting the transmission of the wireless signal in the period in response to receiving a first wireless frame for indicating start of the P2P communication from the access point.

3. The terminal apparatus according to claim 2, wherein
the processor is further configured to remove the transmission prohibition in response to not receiving a second wireless frame from the one terminal apparatus.

4. The terminal apparatus according to claim 3, wherein
the second wireless frame is a response frame to the first wireless frame.

5. The terminal apparatus according to any one of claims 1 to 4, wherein
the first time period is equal to or longer than a length of the period.

6. An access point comprising:
a communication circuit configured to transmit and receive a wireless signal; and
a processor configured to establish a wireless link with a first terminal apparatus, a second terminal apparatus, and a third terminal apparatus by using the communication circuit, to allocate a period for peer-to-peer (P2P) communication by the first terminal apparatus and the second terminal apparatus, to prohibit transmission and reception of data in a case where the third terminal apparatus is in a coverage area of either the first terminal apparatus or the second terminal apparatus in the period, and to accept transmission and reception of data in a case where the third terminal apparatus is outside the coverage area of the one terminal apparatus.

7. The access point according to claim 6, wherein
the processor is further configured to confirm that the third terminal apparatus is outside the coverage area of the one terminal apparatus in response to receiving a first wireless frame from the third terminal apparatus in the period.
